# DEMANDE DE BREVET EUROPEEN

(11) **EP 1 352 812 A1**
(43) Date de publication de la demande: **15.10.2003**
(21) Numéro de dépôt: 03290878.2
(22) Date de dépôt: 09.04.2003
(51) Int. Cl.: B62D 25/08, F28F 9/00

(54) **Distributeur de fluide caloporteur pour un réseau de canaux d'un radiateur de véhicule automobile et face avant technique obtenue à partir d'un tel distributeur**

(30) Priorité: 09.04.2002 FR 0204425
(71) Demandeur: COMPAGNIE PLASTIC OMNIUM, 69007 Lyon (FR)
(72) Inventeur: Andre, Gérald, 01500 Amberieu en Bugey (FR); Cheron, Hugues, 01800 Meximieux (FR); Fayt, Arnold, 01640 Jujurieux (FR)
(74) Mandataire: de la Bigne, Guillaume Michel Marie

(57) **Abrégé**

L'invention concerne un distributeur de fluide caloporteur d'un radiateur de véhicule automobile, ce radiateur étant constitué d'un réseau de canaux (1) débouchant sur ses bords latéraux (2,3). Le distributeur (4, 5) permet la circulation de fluide caloporteur et est en outre muni de moyens (7) permettant sa fixation rigide au châssis du véhicule, cette fixation rigide assurant la transmission au châssis du véhicule de tous les efforts repris par le distributeur.

L'invention concerne également une face avant technique réalisée à partir de deux tels distributeurs.

## Description

La présente invention concerne un distributeur de fluide caloporteur pour un réseau de canaux d'un radiateur de véhicule automobile et une face avant technique obtenue à partir d'un tel distributeur.

On sait que le système de refroidissement d'un véhicule automobile comprend, en particulier, un radiateur qui est constitué d'un réseau de canaux permettant à un fluide caloporteur circulant dans ces canaux d'échanger des calories avec l'air ambiant. Le fluide caloporteur est distribué à une extrémité et collecté à une autre extrémité de chaque canal du radiateur grâce à des distributeurs de fluides placés le long des bords du radiateur.

Par ailleurs, on sait qu'à l'avant d'un véhicule automobile, on utilise des éléments rigides constituant la structure du véhicule pour supporter différents organes fonctionnels tels qu'une serrure de capot et/ou des blocs optiques et/ou une traverse de chocs.

La présente invention réunit les deux fonctions de distribution de fluide caloporteur et de support structurel à l'avant du véhicule.

De façon plus précise, la présente invention a pour objet un distributeur de fluide caloporteur d'un radiateur de véhicule automobile, ce radiateur étant constitué d'un réseau de canaux débouchant sur ses bords latéraux, le distributeur étant caractérisé en ce qu'il présente une forme allongée et une structure tubulaire définissant au moins une cavité permettant la circulation de fluide caloporteur suivant sa direction longitudinale, ainsi qu'au moins une ouverture latérale apte à mettre ladite cavité en communication avec le radiateur lorsque le distributeur est placé en bordure latérale du radiateur, le distributeur étant en outre muni de moyens permettant sa fixation rigide au châssis du véhicule, cette fixation rigide assurant la transmission au châssis du véhicule de tous les efforts repris par le distributeur.

Les inventeurs à la base de la présente invention ont en effet réalisé que si l'on positionne les distributeurs de fluide caloporteur le long des bords verticaux du radiateur et si on leur confère une structure tubulaire qui est propice à la distribution de fluides, on réalise simultanément des éléments rigides aptes à constituer des supports structurels. En d'autres termes, en modifiant la constitution du radiateur, on réalise une face avant technique structurelle, apte à supporter différents organes fonctionnels du véhicule, sans apport d'éléments rigides externes en plus de ceux constituant les distributeurs de fluide caloporteur.

Il résulte de l'invention que tant le poids que le prix de l'ensemble constitué par le radiateur et la face avant technique sont considérablement réduits par rapport à une structure conventionnelle de face avant technique pourvue d'un radiateur.

En outre, notamment dans certains modes de réalisation, l'invention procure également une réduction d'encombrement remarquable.

Le distributeur de fluide selon l'invention possède différents modes de réalisation particuliers, indépendants les uns des autres, mais compatibles entre eux. Ainsi, l'invention peut présenter les caractéristiques suivantes :
- Le distributeur de fluide comporte une platine de fixation latérale s'étendant du côté opposé à l'ouverture permettant le passage du fluide caloporteur entre le distributeur de fluide et le radiateur, cette platine de fixation permettant la fixation du distributeur de fluides à l'extrémité d'un longeron du véhicule. Dans ce cas, le radiateur se trouve solidaire du châssis du véhicule en étant placé entre les longerons et participe ainsi à la reprise des efforts statiques et vibratoires auxquels est soumis l'avant de la structure du véhicule.
- La partie tubulaire du distributeur de fluide est directement fixée à l'extrémité du longeron et se trouve intercalée entre ledit longeron et une poutre de chocs fixée devant le distributeur de fluides, dans le prolongement du longeron. Dans ce cas, le distributeur de fluide participe à la reprise des efforts, comme dans le mode de réalisation précédent, mais en outre il sert d'absorbeur de chocs grâce à sa structure tubulaire et aux propriétés du matériau dont il est constitué (aluminium ou alliage similaire), qui peut supporter de grandes déformations sans rupture.
- Comme dans le mode de réalisation précédent, le distributeur est placé avec sa partie tubulaire à l'extrémité du longeron, mais en outre, il dépasse en dessous du longeron, où il supporte la voie structurelle basse du châssis, reprenant les efforts de chocs «piétons» et/ou les efforts relatifs aux chocs avec des véhicules dont les poutres de chocs sont situées plus bas que celles du véhicule équipé du distributeur selon l'invention.
- Une traverse supérieure structurelle relie les deux distributeurs situés de part et d'autre du réseau de canaux du radiateur. Cette traverse supérieure supporte la serrure du capot ainsi qu'un crochet de sécurité. En outre, la traverse supérieure participe à la raideur du véhicule.
- La partie supérieure de chaque distributeur supporte directement une serrure de capot et/ou un crochet de sécurité de capot. Dans ce cas, il n'est pas nécessaire de prévoir une traverse supérieure structurelle reliant les deux distributeurs. Seule la fonction de transmission des efforts entre les longerons et l'accrochage capot est remplie. La fonction de rigidification de la structure du véhicule par unification des deux distributeurs n'est pas remplie.
- Le distributeur comporte des supports pour des organes fonctionnels du véhicule et, notamment, pour des blocs optiques.
- Le support pour un bloc optique est un élément rigide qui comporte un moyen de fixation avec une doublure d'aile. Dans ce cas, et même en l'absence de traverse supérieure, la rigidité de l'avant du véhicule est obtenue grâce à la connexion rigide entre le distributeur et la doublure d'aile. La présence d'une poutre de chocs réunissant les deux distributeurs procure une rigidité suffisante de l'avant du véhicule.
- En variante du mode de réalisation précédent, les supports pour les blocs optiques peuvent être constitués directement par des blocs optiques à structure rigide.
- Chaque distributeur de fluide comprend plusieurs cavités de distribution de fluides pour alimenter un radiateur complexe utilisant plusieurs circuits de fluides ou pour véhiculer d'autres fluides externes aux circuits de refroidissement.
- Le distributeur est réalisé par extrusion.
- Le distributeur comprend des bouchons à chacune de ses extrémités supérieure et inférieure, l'un au moins de ces bouchons remplissant un rôle supplémentaire lié à la fonction structurelle du distributeur, tel que le traitement des chocs «piéton» s'il s'agit du bouchon supérieur ou le traitement des chocs «par la voie basse» s'il s'agit du bouchon inférieur.

La présente invention a également pour objet une face avant technique réalisée à partir de deux distributeurs tels que décrits ci-dessus et d'un réseau de canaux de circulation de fluide caloporteur.

Différents modes de réalisation et leurs avantages vont être maintenant décrits plus en détail dans la suite de la description, à l'aide des dessins annexés, qui illustrent ces modes de réalisation de manière non limitative. Sur ces dessins :
- la figure 1 est une vue en perspective partiellement éclatée d'un radiateur muni de deux distributeurs selon l'invention,
- la figure 2 est une vue en perspective d'une coupe transversale d'un distributeur et de portions de canaux de radiateur,
- la figure 3 est une section horizontale schématique à hauteur d'un longeron de la structure de la figure 1,
- la figure 4 est une section horizontale semblable à celle de la figure 3, montrant un autre mode de réalisation du distributeur,
- la figure 5 est une section analogue à la figure 4 prise sous un longeron montrant un autre mode de réalisation du distributeur,
- la figure 6 est une vue schématique de face d'un radiateur muni de deux distributeurs et d'une traverse,
- la figure 7 représente une variante du mode de réalisation de la figure 6,
- la figure 8 est une vue analogue à la figure 6 d'un autre mode de réalisation,
- la figure 9 est une vue analogue à la figure 6 d'un autre mode de réalisation,
- la figure 10 est une vue analogue à la figure 6 d'un autre mode de réalisation,
- la figure 11 est une section longitudinale d'un distributeur selon un autre mode de réalisation de l'invention,
- la figure 12 est une vue en perspective d'un distributeur selon un autre mode de réalisation.

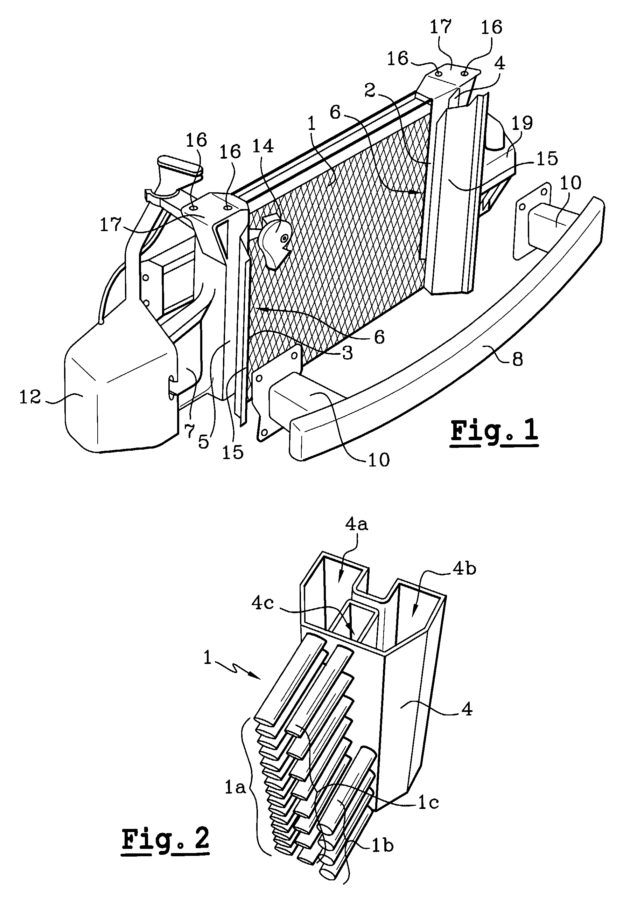

Sur la figure 1, on a représenté un radiateur formé d'un réseau de canaux 1 dont les extrémités débouchent sur les bords latéraux droit 2 et gauche 3 du radiateur et deux distributeurs 4, 5 situés le long de ces deux bords droit et gauche du radiateur.

Chaque distributeur 4,5 comporte, sur son côté dirigé vers l'intérieur, c'est-à-dire vers le radiateur, plusieurs ouvertures longitudinales 6 par lesquelles les canaux du radiateur communiquent avec l'intérieur du distributeur, qui délimite au moins une cavité de circulation du fluide sur toute la hauteur du radiateur.

Chaque distributeur 4, 5 est conformé pour coiffer le bord 2,3 du radiateur et s'y solidariser par des moyens spécifiques (non représentés).

Une platine de fixation 7 fait saillie de chaque distributeur 4, 5 à l'opposé du radiateur, de manière à se trouver en face de l'extrémité (non représentée) d'un longeron du véhicule.

Cette platine de fixation 7, venue de matière avec le distributeur, assure la solidarisation de ce dernier avec la structure du véhicule et lui permet de reprendre une partie des efforts auxquels est soumis l'avant du véhicule.

Une poutre de chocs 8 portée par deux absorbeurs 10 vient se positionner sur les platines de fixation, dans le prolongement du longeron, étant fixée à l'extrémité dudit longeron. Chaque platine de fixation 7 est ainsi prise en sandwich entre le longeron et l'absorbeur correspondants.

Avec cet agencement, on réalise un gain en encombrement grâce au fait que le distributeur n'est pas doublé d'un encadrement constituant la partie rigide de la structure avant du véhicule.

D'autres supports sont solidaires du distributeur. Dans le mode de réalisation de la figure 1, ces supports sont également venus de matière avec le distributeur.

Ainsi, un réservoir de liquide 12 et un bocal de dégazage 19 peuvent être solidarisés aux distributeurs. De même, un avertisseur sonore 14 peut être monté sur un des distributeurs et les deux distributeurs peuvent servir de support à des convergents latéraux 15.

Sur la figure 2, on a représenté en perspective une coupe transversale d'un distributeur 4 dont le volume intérieur délimite trois cavités 4a, 4b, 4c.

On voit que le réseau de canaux 1 comprend trois nappes de canaux 1a, 1b, 1c dont les canaux débouchent respectivement dans les cavités 4a, 4b, 4c.

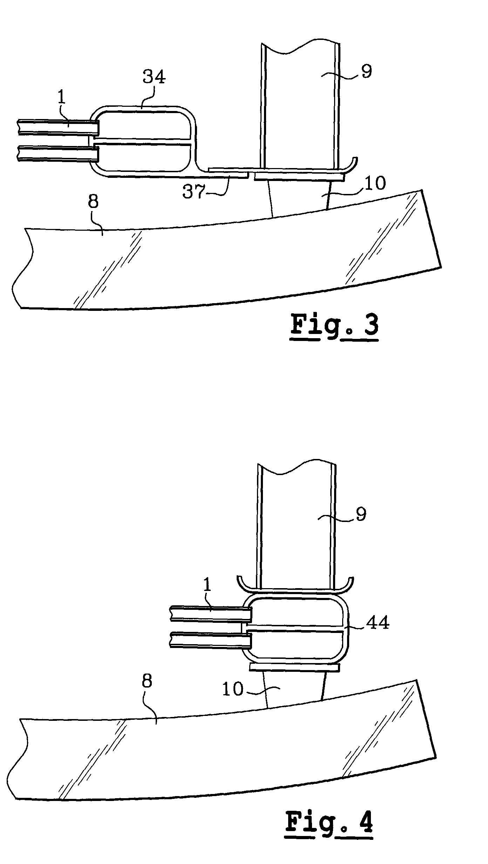

Dans le mode de réalisation de la figure 3, les positions relatives du longeron 9, de la poutre de chocs 8 munie de son absorbeur 10 et du distributeur 34 muni de sa platine 37 différent légèrement du fait que la platine de fixation 37 n'est pas prise en sandwich entre le longeron et la poutre mais se fixe sur l'extrémité du longeron, à côté de l'absorbeur.

On note, de plus, que le distributeur 34 comporte deux cavités intérieures.

Dans le mode de réalisation de la figure 4, le distributeur à deux cavités 44 est directement intercalé entre l'extrémité du longeron 9 et l'absorbeur 10 de la poutre de chocs 8.

La structure tubulaire du distributeur se révèle en effet appropriée pour remplir la fonction d'absorbeur de chocs.

Le distributeur 44 remplit une fonction d'absorption supplémentaire en ajoutant à l'absorbeur 10 un étage d'absorption protégeant la structure du véhicule en cas de choc à haute vitesse.

On économise ainsi le cadre structurel constituant la partie rigide de l'avant du véhicule, tout en contribuant à la réduction de l'encombrement et à la diminution des coûts de réparation.

Dans ce cas, le matériau composant le distributeur est un aluminium ou un autre alliage pouvant supporter de grandes déformations sans rupture.

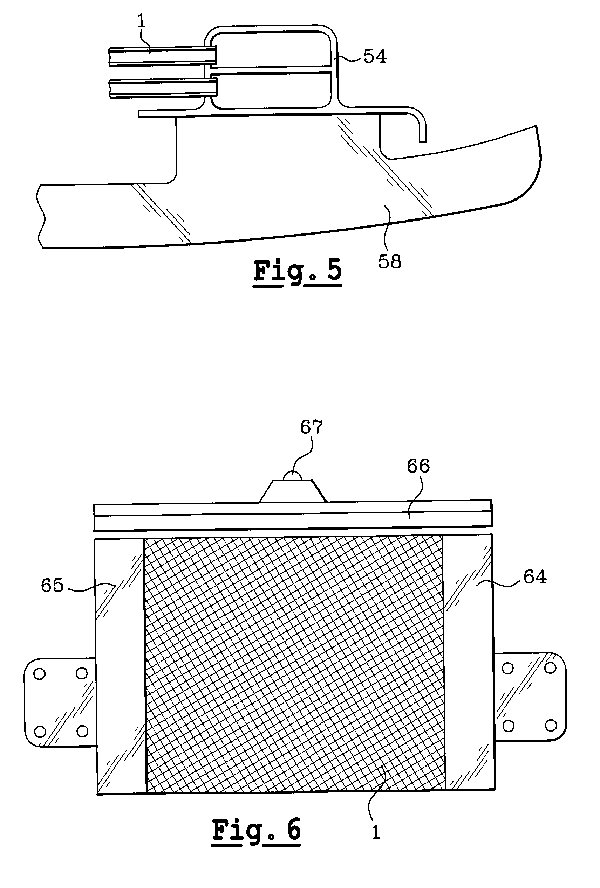

Dans le mode de réalisation de la figure 5, le distributeur 54 est positionné comme dans la figure 4 mais il se prolonge vers le bas en-dessous du longeron, jusqu'à la hauteur d'une voie basse de traitement de chocs. Cette voie basse est matérialisée par une poutre de chocs 58 fixée à l'extrémité inférieure du distributeur 54.

Ainsi, grâce au distributeur, on peut constituer une voie basse à l'avant d'un véhicule sans ajout d'éléments structurels supplémentaires.

Dans le mode de réalisation de la figure 6, les deux distributeurs 64, 65 situés de part et d'autre du radiateur 1 sont reliés par une traverse supérieure 66 qui participe à la raideur du véhicule tout en servant de support à une serrure centrale et à un crochet de sécurité de capot schématisés par une boucle 67.

Les points de fixation 16 de la traverse supérieure 56 sur chaque distributeur 54, 55 sont visibles sur la figure 1, où chaque distributeur comporte un plateau supérieur 17, dont l'accès aisé facilite la fixation de la traverse 66.

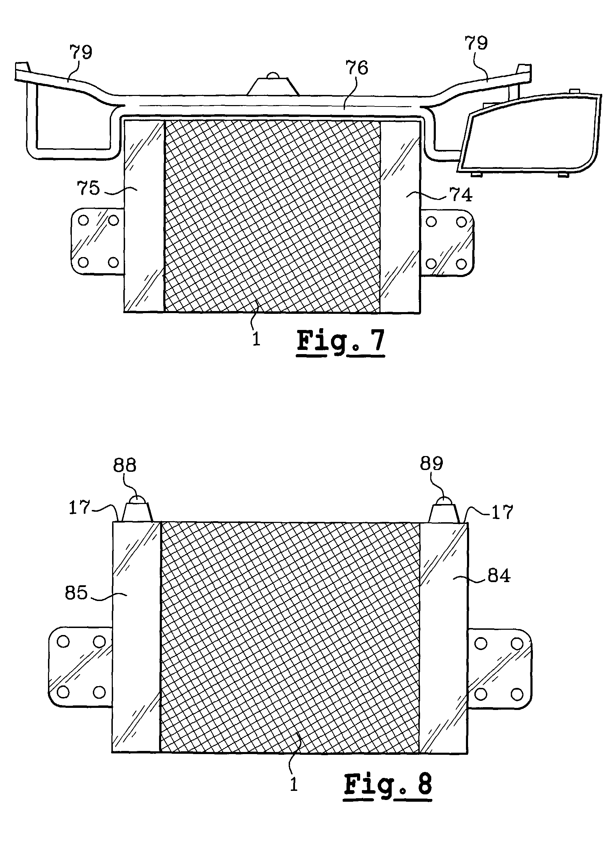

La géométrie de la traverse peut être simple, comme sur la figure 6, ou plus complexe comme la lunette 76 représentée sur la figure 7. Dans ce dernier cas, la traverse supérieure se prolonge à ses extrémités par des supports 79 de blocs optiques, lesquels sont reliés aux renforts de côtés d'auvents du véhicule après fixation de la traverse sur les deux distributeurs 74 et 75.

Dans le mode de réalisation de la figure 8, le plateau supérieur 17 de chaque distributeur 84, 85 sert à fixer directement une serrure de capot et un crochet de sécurité 88 pour l'un, une serrure de capot 89 seule pour l'autre.

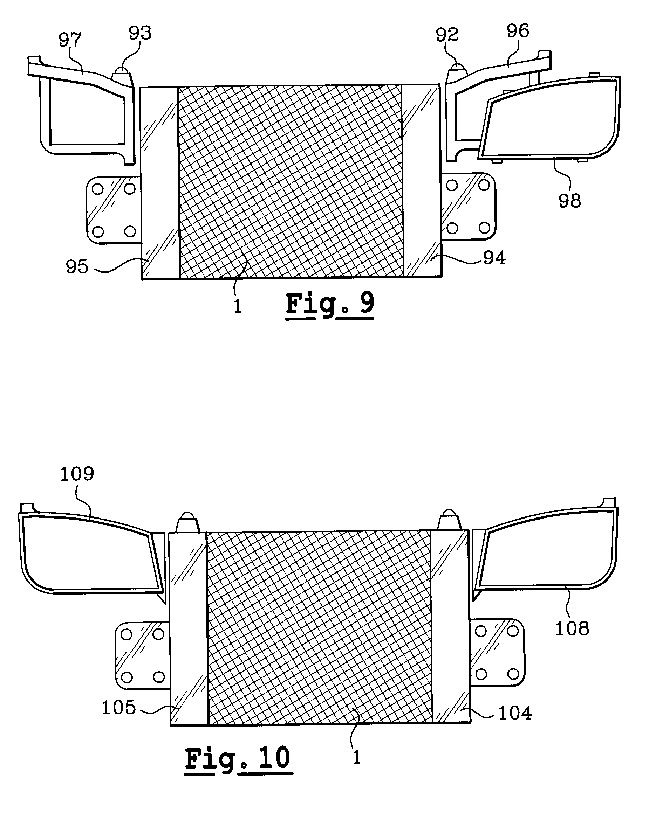

Dans le mode de réalisation de la figure 9, des supports latéraux 96, 97 de blocs optiques 98 sont assujettis aux distributeurs 94, 95. Ces supports latéraux remplissent un rôle structurel en supportant eux-mêmes une serrure de capot et un crochet 92 pour l'un, une serrure de capot 93 pour l'autre, et en étant chacun munis d'une fixation au renfort de côté d'auvent correspondant.

Dans le mode de réalisation de la figure 10, qui est une variante du mode de réalisation précédent, les supports structurels des blocs optiques sont remplacés par les blocs optiques 108, 109 eux-mêmes, ceux-ci étant munis de boîtiers structurels remplissant les mêmes fonctions.

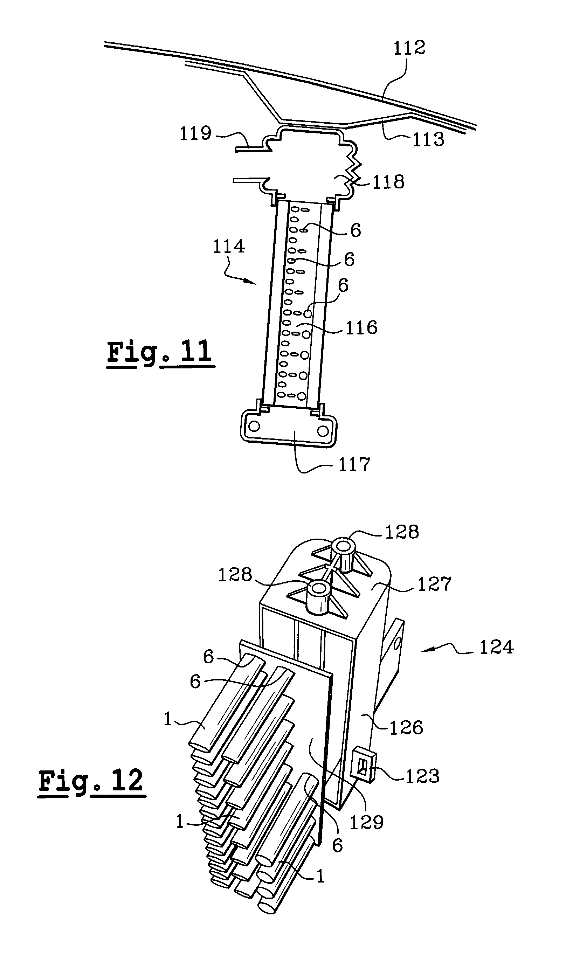

Sur la figure 11, on a représenté un distributeur 114 constitué par une partie longitudinale 116 de section courante constante, réalisée par extrusion, sur laquelle on a percé des ouvertures 6 permettant la mise en communication avec les canaux (non représentés) du radiateur, et par deux bouchons 117, 118 obturant la partie longitudinale à ses extrémités.

Le bouchon inférieur 117 ne remplit pas d'autre fonction. En revanche, le bouchon supérieur 118 sert, d'une part, à l'alimentation du distributeur en fluide caloporteur, grâce à une tubulure 119 communiquant avec la cavité intérieure du distributeur, d'autre part, au traitement des chocs « tête enfant » subis par le véhicule à l'avant du capot 112. A cet effet, une cale 113 permet au capot de prendre appui sur le bouchon 118 et de profiter de la capacité de déformation de ce dernier pour absorber l'énergie du choc.

Sur la figure 12, on a représenté un distributeur 124 qui a été réalisé par moulage en deux parties. Ce distributeur comprend un corps longitudinal 126 ouvert sur toute sa face latérale intérieure. L'intérieur du corps 126 est divisé en trois cavités.

L'autre partie du distributeur est une paroi latérale 129 obturant sa face latérale intérieure et comportant des ouvertures 6 pour les canaux 1 partiellement représentés du radiateur.

L'avantage de réaliser le distributeur par moulage est de pouvoir lui donner une forme adaptée à sa fonction supplémentaire de support d'organes, comme par exemple de support de convergents (non représentés), grâce à des pattes de fixation intégrées 123.

De même, la paroi supérieure 127 du distributeur comprend deux points de fixation 128 intégrés, pour une serrure de capôt.

Il est bien entendu que les modes de réalisation décrits ci-dessus ne présentent aucun caractère limitatif et pourront recevoir toute modification souhaitable sans sortir pour cela du cadre de l'invention.

## Revendications

1. Distributeur de fluide caloporteur d'un radiateur de véhicule automobile, ce radiateur étant constitué d'un réseau de canaux (1) débouchant sur ses bords latéraux (2,3), le distributeur (4,5 ;34,35 ;44 ;54 ;64,65 ;74,75 ;84,85 ;94,95 ; 104,105 ;114 ;124) présentant une forme allongée et une structure tubulaire définissant au moins une cavité (4a,4b,4c) permettant la circulation de fluide caloporteur suivant sa direction longitudinale, ainsi qu'au moins une ouverture latérale (6) apte à mettre ladite cavité en communication avec le radiateur lorsque le distributeur est placé en bordure latérale du radiateur, le distributeur étant en outre muni de moyens (7) permettant sa fixation rigide au châssis (9) du véhicule, cette fixation rigide assurant la transmission au châssis du véhicule de tous les efforts repris par le distributeur, **caractérisé en ce que** les moyens permettant la fixation rigide du distributeur au châssis du véhicule sont venus de matière avec le distributeur.

2. Distributeur selon la revendication 1, **caractérisé en ce qu'**il comporte une platine de fixation latérale (7) s'étendant du côté opposé à l'ouverture (6) permettant le passage du fluide caloporteur entre le distributeur de fluide et le radiateur, cette platine de fixation permettant la fixation du distributeur de fluides à l'extrémité d'un longeron (9) du véhicule.

3. Distributeur selon l'une quelconque des revendications 1 et 2, **caractérisé en ce que** sa partie tubulaire (44 ;54) est directement fixée à l'extrémité du longeron (9) et se trouve intercalée entre ledit longeron (9) et une poutre de chocs (10) fixée devant le distributeur de fluides, dans le prolongement du longeron.

4. Distributeur selon l'une quelconque des revendications 1 à 3, **caractérisé en ce qu'**il est placé avec sa partie tubulaire (54) à l'extrémité du longeron mais dépasse en dessous du longeron, où il supporte la voie structurelle basse (58) du châssis.

5. Distributeur selon l'une quelconque des revendications 1 à 4, **caractérisé en ce qu'**une traverse supérieure structurelle (66 ;76) relie les deux distributeurs (64,65 ;74,75) situés de part et d'autre du réseau de canaux (1) du radiateur.

6. Distributeur selon l'une quelconque des revendications 1 à 4, **caractérisé en ce que** la partie supérieure (17) de chaque distributeur (84,85) supporte directement une serrure de capot et/ou un crochet de sécurité de capot (88,89).

7. Distributeur selon l'une quelconque des revendications 1 à 6, **caractérisé en ce qu'**il comporte des supports (96,97) pour des organes fonctionnels du véhicule et, notamment, pour des blocs optiques (98).

8. Distributeur selon la revendication 7, **caractérisé en ce que** le support (96,97) pour un bloc optique (98) est un élément rigide qui comporte un moyen de fixation avec une doublure d'aile.

9. Distributeur selon l'une quelconque des revendications 1 à 8, **caractérisé en ce qu'**il comporte plusieurs cavités (4a,4b,4c) de distribution de fluides pour alimenter un radiateur complexe (1a,1b,1c) utilisant plusieurs circuits de fluides ou pour véhiculer d'autres fluides externes aux circuits de refroidissement.

10. Distributeur selon l'une quelconque des revendications 1 à 9, **caractérisé en ce qu'**il comprend des bouchons (117,118) à chacune de ses extrémités supérieure et inférieure, l'un (118) au moins de ces bouchons remplissant un rôle supplémentaire lié à la fonction structurelle du distributeur, tel que le traitement des chocs « piéton » s'il s'agit du bouchon supérieur ou le traitement des chocs « par la voie basse » s'il s'agit du bouchon inférieur.

11. Face avant technique de véhicule automobile réalisée à partir de deux distributeurs selon l'une quelconque des revendications 1 à 10 et d'un réseau de canaux (1) de circulation de fluide caloporteur.
